# EUROPÄISCHE PATENTANMELDUNG

(11) **EP 2 088 542 A1**
(43) Veröffentlichungstag der Anmeldung: **12.08.2009**
(21) Anmeldenummer: 08002315.3
(22) Anmeldetag: 08.02.2008
(51) Int. Cl.: G06Q 10/00, G06Q 30/00, G07B 15/00, G07B 15/02

(54) **Verfahren zur Beanspruchung von verkehrsmittelspezifischen Dienstleistungen**

(71) Anmelder: SkiData AG, 5083 Grödig/Salzburg (AT)
(72) Erfinder: Pamminger, Herbert, 4814 Neukirchen (AT); Ponert, Gregor, 5020 Salzburg (AT)
(74) Vertreter: Haft, von Puttkamer, Berngruber

(57) **Zusammenfassung**

Es wird ein Verfahren zur Beanspruchung von verkehrsmittelspezifischen Dienstleistungen vorgeschlagen, im Rahmen dessen für den Fall von Flugdienstleistungen mittels einer RFID- bzw. NFC - Interaktion zwischen einem RFID- bzw. NFC-fähigen tragbaren Gerät bzw. einem Mobiltelefon des Benutzers und einem Smartposter, umfassend ein RFID- bzw. NFC-Label ein aktivierbarer Link an das tragbare Gerät bzw. an das Mobiltelefon übermittelt wird, wobei nach Aktivierung des Links der Benutzer mit dem Check-In System der Fluggesellschaft verbunden wird, wobei die Identifizierung des Benutzers anhand seiner Vielfliegernummer, seines Vor- und Nachamens, einer Kreditkartennummer, mit der das Ticket bezahlt worden ist, der Buchungsnummer und/oder der Nummer des elektronischen Tickets erfolgt und wobei nach der Identifizierung des Benutzers dieser menügesteuert einchecken und seinen Sitzplatz im Flugzeug auswählen kann.

## Beschreibung

Die vorliegende Erfindung bezieht sich auf ein Verfahren zur Beanspruchung von verkehrsmittelspezifischen Dienstleistungen gemäß dem Oberbegriff des Patentanspruchs 1.

Aus dem Stand der Technik ist bekannt, RFID-Technologie zur Bereitstellung von Informationen auf einem mobilen Kommunikationsgerät, beispielsweise auf einem Mobiltelefon zu verwenden.

In der Regel wird hierbei als RFID-Technologie NFC - Technologie eingesetzt (NFC - Technologie steht für Near-Field-Communication - Technologie, die bekannterweise eine auf RFID-Funktechnologie basierende Funktechnologie für kurze Distanzen ist).

Beispielsweise ist aus der EP 162 2346 A1 ein Verfahren bekannt, bei dem das mobile Kommunikationsgerät eine RFID-Lesevorrichtung umfasst, wobei anhand der empfangenen RFID-Informationen durch eine Menüführung weitere Informationen über eine Netzwerkschnittstelle angefordert werden können.

Im Rahmen der EP 162 2346 A1 wird ein Verfahren vorgestellt, durch dessen Durchführung die Bestellung und Bezahlung eines ein RFID-Label aufweisenden Gegenstandes ermöglicht wird.

Der vorliegenden Erfindung liegt die Aufgabe zugrunde, ein Verfahren zur Beanspruchung von verkehrsmittelspezifischen Dienstleistungen zur Verfügung zu stellen, durch dessen Durchführung die Abwicklung der Beanspruchung von verkehrsmittelspezifischen Dienstleistungen vereinfacht wird.

Diese Aufgabe wird durch die Merkmale der Patentansprüche 1 und 7 gelöst. Weitere erfindungsgemäße Ausgestaltungen und Vorteile gehen aus den Unteransprüchen hervor.

Demnach wird im Rahmen des Verfahrens zur Beanspruchung von verkehrsmittelspezifischen Dienstleistungen vorgeschlagen, dass für den Fall von Flugdienstleistungen mittels einer RFID-Interaktion, vorzugsweise einer NFC-Interaktion zwischen einem RFID- bzw. NFC-fähigen tragbaren Gerät bzw. einem Mobiltelefon des Benutzers und einem Smartposter, umfassend ein RFID- bzw. NFC-Label ein aktivierbarer Link an das tragbare Gerät bzw. an das Mobiltelefon übermittelt wird, wobei nach Aktivierung des Links der Benutzer mit dem Check-In System der Fluggesellschaft verbunden wird und wobei die Identifizierung des Benutzers anhand seiner Vielfliegernummer, seines Vor- und Nachamens, einer Kreditkartennummer, mit der das Ticket bezahlt worden ist, der Buchungsnummer und/oder der Nummer des elektronischen Tickets erfolgt.

Das tragbare Gerät im Sinne der Erfindung kann beispielsweise ein Notebook oder ein PDA sein, wobei es vorzugsweise auch eine GSM-basierte Kommunikation ermöglicht bzw. die Funktionalität eines Mobiltelefons aufweist.

Die Aktivierung des Links kann mittels eines Mobilfunknetzes, mittels WLAN, Bluetooth ® oder über eine andere berührungslose Verbindungstechnologie erfolgen.

Nach der Identifizierung des Benutzers kann dieser menügesteuert einchecken und seinen Sitzplatz im Flugzeug auswählen.

Im Rahmen einer vorteilhaften Weiterbildung der Erfindung wird die Bordkarte in elektronischer Form, enthaltend einen ein- oder zweidimensionalen Barcode und/oder eine eineindeutige Ziffern-Buchstaben-Kombination an das tragbare Gerät bzw. das Mobiltelefon des Benutzers übermittelt.

Für den Fall, dass der Benutzer sein Gepäck aufgeben möchte bzw. aufgeben muss, kann er dies an einem Schalter oder an einem Automaten tun, wobei seine Flugdaten der elektronischen Bordkarte entnommen werden können. Für den Fall eines Automaten wird der Barcode eingelesen bzw. über eine RFID- bzw. NFC-Interaktion vom tragbaren Gerät bzw. vom Mobiltelefon des Benutzers an den Automaten übermittelt, wobei anschließend ein entsprechendes Etikett für jedes Gepäckstück ausgedruckt wird.

Gemäß der Erfindung kann am Abfluggate von einer Zutrittskontrolleinrichtung, umfassend einen Scanner, der Barcode direkt vom Display des tragbaren Gerätes bzw. des Mobiltelefons des Benutzers eingelesen werden, so dass dem Benutzer auf diese Weise der Zutritt in das Flugzeug gewährt wird. Hierbei kann vorgesehen sein, dass ein Barcode nur einmal eingelesen bzw. ausgewertet werden darf, so dass ein Missbrauch vermieden wird.

Alternativ zum Einlesen des Barcodes mittels eines Scanners kann der Barcode bzw. die eineindeutige Ziffern-Buchstaben-Kombination mittels einer RFID- bzw. NFC-Interaktion vom tragbaren Gerät bzw. vom Mobiltelefon des Benutzers an die Zutrittskontrolleinrichtung am Abfluggate übertragen werden, wobei nach erfolgter Auswertung der Zutritt gewährt wird.

Gemäß einer vorteilhaften Weiterbildung der Erfindung kann vorgesehen sein, dass nach abgeschlossenem Check-In an das tragbare Gerät bzw. an das Mobiltelefon des Benutzers Informationen übermittelt werden, welche beispielsweise die aktuelle Abflugzeit, das Abfluggate und/oder eine Wegbeschreibung zum Abfluggate zum Gegenstand haben. Des weiteren können Informationen übermittelt werden, die Einrichtungen des Flughafens, beispielsweise Lounges und/oder Einkaufsmöglichkeiten betreffen.

In vorteilhafter Weise können die Smartposter, welche das RFID- bzw. NFC - Label aufweisen, an der zumindest einen Parkhauseinfahrt des Flughafenparkhauses und/oder an weiteren Orten innerhalb des Parkhauses vorgesehen sein; alternativ oder zusätzlich dazu können Smartposter enthaltend das RFID- bzw. NFC - Label in Bahnhöfen, in Hotels oder in weiteren geeigneten Orten vorgesehen sein.

Gemäß der Erfindung wird für den Fall von öffentlichen erdgebundenen Verkehrsmitteln vorgeschlagen, dass ebenfalls mittels einer RFID-Interaktion, vorzugsweise einer NFC-Interaktion zwischen einem RFID- bzw. NFC-fähigen tragbaren Gerät bzw. einem Mobiltelefon des Benutzers und einem Smartposter, umfassend ein RFID- bzw. NFC-Label ein aktivierbarer Link an das tragbare Gerät bzw. an das Mobiltelefon übermittelt wird, wobei nach Aktivierung des Links der Benutzer mit einem entsprechenden Buchungssystem, beispielsweise mit einem Buchungssystem des örtlichen Verkehrsverbundes verbunden wird.

Hierbei kann der Benutzer menügesteuert Fahrplaninformationen abrufen und/oder ein Ticket kaufen wobei die erforderliche Bezahlung über im tragbaren Gerät bzw. Mobiltelefon gespeicherten Kreditkarten- oder Bankverbindungsdaten, über eine Direktbezahlung über die Telefonnummer des Mobiltelefons, oder durch Auslösen einer Kreditkartentransaktion durch Auslesen der Kreditkartendaten von einer maschinenlesbaren oder RFID-lesbaren Kreditkarte erfolgt. Das Ticket kann gemäß der Erfindung in elektronischer Form an das tragbare Gerät bzw. Mobiltelefon übermittelt werden, wobei es als Daten zumindest einen ein- oder zweidimensionalen Barcode und/oder eine eineindeutige Ziffern-Buchstaben-Kombination enthält.

Bei einer Fahrkartenkontrolle kann gemäß einem Aspekt der Erfindung der Barcode direkt vom Display des tragbaren Gerätes bzw. des Mobiltelefons des Benutzers eingelesen werden, um die Gültigkeit des Tickets zu überprüfen. Alternativ dazu kann bei einer Fahrkartenkontrolle das Ticket mittels einer RFID- bzw. NFC-Interaktion zwischen dem RFID- bzw. NFC-fähigen tragbaren Gerät bzw. dem Mobiltelefon des Benutzers und einem RFID- bzw. NFC - fähigen Gerät des Kontrolleurs ausgelesen werden, um die Gültigkeit des Tickets zu überprüfen.

Erfindungsgemäß kann auch mittels einer RFID- bzw. NFC-Interaktion zwischen dem tragbaren Gerät bzw. dem Mobiltelefon des Benutzers und einem mit dem Buchungsserver verbindbaren Ticketautomaten der Barcode und/oder die eineindeutige Ziffern-Buchstaben-Kombination an den Ticketautomaten übertragen werden, wobei nach erfolgter Überprüfung dieser Daten das entsprechende Ticket ausgedruckt wird.

Für den Fall eines nicht mit dem Buchungsserver verbindbaren Ticketautomaten kann vorgesehen sein, dass mittels einer RFID- bzw. NFC-Interaktion zwischen dem tragbaren Gerät bzw. dem Mobiltelefon des Benutzers und einem Ticketautomaten der Barcode und/oder die eineindeutige Ziffern-Buchstaben-Kombination und weitere zur Tickerprüfung relevante Ticketdaten, welche eine Offline - Verifikation des Tickets ermöglichen an den Ticketautomaten übertragen werden, wobei nach erfolgter Offline - Überprüfung dieser Daten das entsprechende Ticket ausgedruckt wird. Daten die eine Offline - Verifikation ermöglichen können beispielsweise das Ausstellungsdatum des Tickets, die Gültigkeitsdauer etc.

Die Smartposter enthaltend das RFID- bzw. NFC - Label können vorzugsweise an den Haltestellen von öffentlichen erdgebundenen Verkehrsmitteln benachbarten Parkhäusern, beispielsweise an den Parkhauseinfahrten, an Haltestellen bzw. in Bahnhöfen, in Hotels oder in weiteren geeigneten Orten vorgesehen sein.

Für den Fall, dass das Smartposter in einem Parkhaus vorgesehen ist, kann im Rahmen eines Park & Ride Konzeptes bei der Abwicklung der Parkvergütung durch eine RFID- bzw. NFC-Interaktion zwischen dem tragbaren Gerät bzw. dem Mobiltelefon des Benutzers und dem Parkautomaten und Übermittlung des ein- oder zweidimensionalen Barcodes und/oder der eineindeutigen Ziffern-Buchstaben-Kombination an den Parkautomaten oder nach Einlesen des ausgedruckten Tickets die Parkgebühr entsprechend reduziert werden. Die Bezahlung kann beispielsweise über im tragbaren Gerät bzw. Mobiltelefon gespeicherten Kreditkarten- oder Bankverbindungsdaten, über eine Direktbezahlung über die Telefonnummer des Mobiltelefons, über eine Barzahlung oder durch Auslösen einer Kreditkartentransaktion durch Auslesen der Kreditkartendaten von einer maschinenlesbaren oder RFID-lesbaren Kreditkarte erfolgen.

## Patentansprüche

1. Verfahren zur Beanspruchung von
verkehrsmittelspezifischen Dienstleistungen, **dadurch gekennzeichnet, dass** für den Fall von Flugdienstleistungen mittels einer RFID- bzw. NFC - Interaktion zwischen einem RFID- bzw. NFC-fähigen tragbaren Gerät bzw. einem Mobiltelefon des Benutzers und einem Smartposter, umfassend ein RFID- bzw. NFC-Label ein aktivierbarer Link an das tragbare Gerät bzw. an das Mobiltelefon übermittelt wird, wobei nach Aktivierung des Links der Benutzer mit dem Check-In System der Fluggesellschaft verbunden wird, wobei die Identifizierung des Benutzers anhand seiner Vielfliegernummer, seines Vor- und Nachamens, einer Kreditkartennummer, mit der das Ticket bezahlt worden ist, der Buchungsnummer und/oder der Nummer des elektronischen Tickets erfolgt und wobei nach der Identifizierung des Benutzers dieser menügesteuert einchecken und seinen Sitzplatz im Flugzeug auswählen kann.

2. Verfahren zur Beanspruchung von
verkehrsmittelspezifischen Dienstleistungen, nach Anspruch 1, **dadurch gekennzeichnet, dass** die Bordkarte in elektronischer Form, enthaltend einen ein- oder zweidimensionalen Barcode und/oder eine eineindeutige Ziffern-Buchstaben-Kombination an das tragbare Gerät bzw. das Mobiltelefon des Benutzers übermittelt wird.

3. Verfahren zur Beanspruchung von
verkehrsmittelspezifischen Dienstleistungen, nach Anspruch 2, **dadurch gekennzeichnet, dass** am Abfluggate von einer Zutrittskontrolleinrichtung, umfassend einen Scanner, der Barcode direkt vom Display des tragbaren Gerätes bzw. des Mobiltelefons des Benutzers eingelesen wird, so dass dem Benutzer auf diese Weise der Zutritt in das Flugzeug gewährt wird.

4. Verfahren zur Beanspruchung von
verkehrsmittelspezifischen Dienstleistungen, nach Anspruch 2, **dadurch gekennzeichnet, dass** der Barcode bzw. die eineindeutige Ziffern-Buchstaben-Kombination mittels einer RFID- bzw. NFC-Interaktion vom tragbaren Gerät bzw. vom Mobiltelefon des Benutzers an die Zutrittskontrolleinrichtung am Abfluggate übertragen wird, wobei nach erfolgter Auswertung dem Benutzer der Zutritt gewährt wird.

5. Verfahren zur Beanspruchung von
verkehrsmittelspezifischen Dienstleistungen, nach Anspruch 1, 2, 3 oder 4, **dadurch gekennzeichnet, dass** nach abgeschlossenem Check-In an das tragbare Gerät bzw. an das Mobiltelefon des Benutzers die aktuelle Abflugzeit, das Abfluggate und/oder eine Wegbeschreibung zum Abfluggate und/oder Informationen über Lounges und/oder Einkaufsmöglichkeiten übermittelt werden.

6. Verfahren zur Beanspruchung von
verkehrsmittelspezifischen Dienstleistungen, nach Anspruch 1, 2, 3, 4 oder 5, **dadurch gekennzeichnet, dass** die Smartposter, welche das RFID- bzw. NFC - Label aufweisen, an der zumindest einen Parkhauseinfahrt des Flughafenparkhauses und/oder an weiteren Orten innerhalb des Parkhauses, in Bahnhöfen, in Hotels und/oder in weiteren geeigneten Orten vorgesehen sind.

7. Verfahren zur Beanspruchung von
verkehrsmittelspezifischen Dienstleistungen, **dadurch gekennzeichnet, dass** für den Fall von öffentlichen erdgebundenen Verkehrsmitteln, mittels einer RFID- bzw. NFC -Interaktion zwischen einem RFID- bzw. NFC-fähigen tragbaren Gerät bzw. einem Mobiltelefon des Benutzers und einem Smartposter, umfassend ein RFID- bzw. NFC-Label ein aktivierbarer Link an das tragbare Gerät bzw. an das Mobiltelefon übermittelt wird, wobei nach Aktivierung des Links der Benutzer mit einem Buchungssystem für öffentliche erdgebundene Verkehrsmittel verbunden wird, wobei nach der Herstellung der Verbindung der Benutzer menügesteuert Fahrplaninformationen abrufen und/oder ein Ticket kaufen kann und wobei das Ticket in elektronischer Form enthaltend zumindest einen ein- oder zweidimensionalen Barcode und/oder eine eineindeutige Ziffern-Buchstaben-Kombination an das tragbare Gerät bzw. Mobiltelefon übermittelt wird.

8. Verfahren zur Beanspruchung von
verkehrsmittelspezifischen Dienstleistungen, nach Anspruch 7, **dadurch gekennzeichnet, dass** die erforderliche Bezahlung über im tragbaren Gerät bzw. Mobiltelefon gespeicherten Kreditkarten- oder Bankverbindungsdaten, über eine Direktbezahlung über die Telefonnummer des Mobiltelefons, oder durch Auslösen einer Kreditkartentransaktion durch Auslesen der Kreditkartendaten von einer maschinenlesbaren oder RFID-lesbaren Kreditkarte erfolgt.

9. Verfahren zur Beanspruchung von
verkehrsmittelspezifischen Dienstleistungen, nach Anspruch 7 oder 8, **dadurch gekennzeichnet, dass** bei einer Fahrkartenkontrolle der Barcode direkt vom Display des tragbaren Gerätes bzw. des Mobiltelefons des Benutzers eingelesen wird, um die Gültigkeit des Tickets zu überprüfen.

10. Verfahren zur Beanspruchung von
verkehrsmittelspezifischen Dienstleistungen, nach Anspruch 7 oder 8, **dadurch gekennzeichnet, dass** bei einer Fahrkartenkontrolle das Ticket mittels einer RFID- bzw. NFC-Interaktion zwischen dem RFID- bzw. NFC-fähigen tragbaren Gerät bzw. dem Mobiltelefon des Benutzers und einem RFID- bzw. NFC - fähigen Gerät des Kontrolleurs ausgelesen wird, um die Gültigkeit des Tickets zu überprüfen.

11. Verfahren zur Beanspruchung von
verkehrsmittelspezifischen Dienstleistungen, nach Anspruch 7, **dadurch gekennzeichnet, dass** mittels einer RFID- bzw. NFC-Interaktion zwischen dem tragbaren Gerät bzw. dem Mobiltelefon des Benutzers und einem mit dem Buchungsserver verbindbaren Ticketautomaten der Barcode und/oder die eineindeutige Ziffern-Buchstaben-Kombination an den Ticketautomaten übertragen werden, wobei nach erfolgter Überprüfung dieser Daten das entsprechende Ticket ausgedruckt wird.

12. Verfahren zur Beanspruchung von
verkehrsmittelspezifischen Dienstleistungen, nach Anspruch 7, **dadurch gekennzeichnet, dass** mittels einer RFID- bzw. NFC-Interaktion zwischen dem tragbaren Gerät bzw. dem Mobiltelefon des Benutzers und einem Ticketautomaten der Barcode und/oder die eineindeutige Ziffern-Buchstaben-Kombination und weitere Ticketdaten, welche eine Offline - Verifikation ermöglichen an den Ticketautomaten übertragen werden, wobei nach erfolgter Überprüfung dieser Daten das entsprechende Ticket ausgedruckt wird.

13. Verfahren zur Beanspruchung von
verkehrsmittelspezifischen Dienstleistungen, nach einem der Ansprüche 7 bis 12, **dadurch gekennzeichnet, dass** die Smartposter, welche das RFID- bzw. NFC - Label aufweisen, an den Haltestellen von öffentlichen erdgebundenen Verkehrsmitteln benachbarten Parkhäusern, an Haltestellen bzw. in Bahnhöfen, in Hotels oder an weiteren geeigneten Orten vorgesehen sind.

14. Verfahren zur Beanspruchung von
verkehrsmittelspezifischen Dienstleistungen, nach Anspruch 13, **dadurch gekennzeichnet, dass** für den Fall, dass das Smartposter in einem Parkhaus vorgesehen ist, bei der Abwicklung der Parkvergütung durch eine RFID- bzw. NFC-Interaktion zwischen dem tragbaren Gerät bzw. dem Mobiltelefon des Benutzers und dem Parkautomaten nach Übermittlung des ein- oder zweidimensionalen Barcodes und/oder der eineindeutigen Ziffern-Buchstaben-Kombination an den Parkautomaten oder nach Einlesen des ausgedruckten Tickets die Parkgebühr entsprechend reduziert wird.

15. Verfahren zur Beanspruchung von
verkehrsmittelspezifischen Dienstleistungen, nach einem der vorangehenden Ansprüche, **dadurch gekennzeichnet, dass** die Aktivierung des Links mittels eines Mobilfunknetzes, mittels WLAN, Bluetooth ® oder über eine andere berührungslose Verbindungstechnologie erfolgt.
